# EUROPEAN PATENT APPLICATION

(11) **EP 2 248 786 A1**
(43) Date of publication of application: **10.11.2010**
(21) Application number: 10160945.1
(22) Date of filing: 23.04.2010
(51) Int. Cl.: C04B 35/573, C04B 35/80, C04B 41/50, D01F 11/12, C04B 35/628

(54) **Process of producing ceramic matrix composites**

(30) Priority: 30.04.2009 US 433090
(71) Applicant: General Electric Company, Schenectady, NY 12345 (US)
(72) Inventor: Kebbede, Anteneh, Niskayuna, NY 12309 (US); Luthra, Krishan, Niskayuna, NY 12309 (US); Corman, Gregory, Ballston Lake, NY 12019 (US)
(74) Representative: Szary, Anne Catherine

(57) **Abstract**

A process for producing a silicon-containing CMC article (10) that exhibits improved physical, mechanical, and microstructural properties at elevated temperatures exceeding the melting point of silicon. The process entails producing a body containing a ceramic reinforcement material (14,16) in a solid matrix that comprises solid elemental silicon and/or silicon alloy and a ceramic matrix material (18). The ceramic matrix composite article (10) is produced by at least partially removing the solid elemental silicon and/or silicon alloy from the solid matrix and optionally reacting at least part of the solid elemental silicon and/or silicon alloy in the solid matrix to form one or more refractory materials. The solid elemental silicon and/or silicon alloy is sufficiently removed from the body to enable the ceramic matrix composite article (10) to structurally and chemically withstand temperatures above 1405°C.

## Description

### BACKGROUND OF THE INVENTION

The present invention generally relates to ceramic matrix composite (CMC) articles and processes for their production. More particularly, this invention is directed to a process of producing silicon-containing CMC articles that includes processing steps capable of yielding CMC articles that exhibit suitable physical, mechanical, and microstructural properties at elevated temperatures.

Higher operating temperatures for gas turbine engines are continuously sought in order to increase their efficiency. Though significant advances in high temperature capabilities have been achieved through formulation of iron, nickel and cobalt-base superalloys, alternative materials have been investigated. CMC materials are a notable example because their high temperature capabilities can significantly reduce cooling air requirements. CMC materials generally comprise a ceramic fiber reinforcement material embedded in a ceramic matrix material. The reinforcement material may be discontinuous short fibers dispersed in the matrix material or continuous fibers or fiber bundles oriented within the matrix material, and serves as the load-bearing constituent of the CMC in the event of a matrix crack. In turn, the ceramic matrix protects the reinforcement material, maintains the orientation of its fibers, and serves to dissipate loads to the reinforcement material. Individual fibers (filaments) are often coated with a release agent, such as boron nitride (BN) or carbon, to form a weak interface or de-bond layer that allows for limited and controlled slip between the fibers and the ceramic matrix material. As cracks develop in the CMC, one or more fibers bridging the crack act to redistribute the load to adjacent fibers and regions of the matrix material, thus inhibiting or at least slowing further propagation of the crack.

Continuous fiber reinforced ceramic composites (CFCC) are a type of CMC that offers light weight, high strength, and high stiffness for a variety of high temperature load-bearing applications, including shrouds, combustor liners, vanes, blades, and other high-temperature components of gas turbine engines. A CFCC material is generally characterized by continuous fibers (filaments) that may be arranged to form a unidirectional array of fibers, or bundled in tows that are arranged to form a unidirectional array of tows, or bundled in tows that are woven to form a two-dimensional fabric or woven or braided to form a three-dimensional fabric. For three-dimensional fabrics, sets of unidirectional tows may, for example, be interwoven transverse to each other. As with CMCs reinforced with individual fibers, individual tows of a CFCC material can be coated with a release agent to form a de-bond layer that inhibits crack propagation.

Of particular interest to high-temperature applications are silicon-based composites, such as silicon carbide (SiC) as the matrix and/or reinforcement material. A notable example of a CFCC has been developed by the General Electric Company under the name HiPerComp®, and contains continuous silicon carbide fibers in a matrix of silicon carbide and elemental silicon or a silicon alloy (which as used herein refers to silicon that is not in the form of a compound, but may be pure silicon or in the form of an alloy of silicon with other metals, such as boron). Notable silicon carbide fiber materials include NICALON®, HI-NICALON®, and HI-NICALON® Type S fibers commercially available from Nippon Carbon Co., Ltd., or the Tyranno family of fibers available from UBE Industries, Ltd. SiC fibers have also been used as a reinforcement material for a variety of other ceramic matrix materials, including titanium carbide (TiC), silicon nitride (Si₃N₄), and alumina (Al₂O₃).

Examples of SiC/Si-SiC (fiber/matrix) CFCC materials and processes are disclosed in commonly-assigned U.S. Patent Nos. 5,015,540, 5,330,854, 5,336,350, 5,628,938, 6,024,898, 6,258,737, 6,403,158, and 6,503,441, and commonly-assigned U.S. Patent Application Publication No. 2004/0067316. One such process is known as "prepreg" melt-infiltration (MI), which in general terms entails the fabrication of CMCs using multiple prepreg layers, each in the form of a tape-like structure comprising the desired reinforcement material, a precursor of the CMC matrix material, carbon or a carbon source, and one or more binders. An organic binder can be used as the carbon source. The prepreg must undergo processing (including firing) to convert the precursor to the desired ceramic. Prepregs for CFCC materials frequently comprise a two-dimensional fiber array comprising a single layer of unidirectionally-aligned tows impregnated with a matrix precursor to create a generally two-dimensional laminate. Multiple plies of the resulting prepregs are stacked and debulked to form a laminate preform, a process referred to as "lay-up." The prepregs are typically arranged so that tows of the prepreg layers are oriented transverse (e.g., perpendicular) to each other, providing greater strength in the laminar plane of the preform (corresponding to the principal (load-bearing) directions of the final CMC component). Following lay-up, the laminate preform will typically undergo debulking and curing while subjected to applied pressure and an elevated temperature, such as in an autoclave. The melt-infiltration process generally entails heating the laminate preform in a vacuum or an inert atmosphere to decompose the binders and produce a porous preform ready for melt infiltration. If an organic binder is used, the binder pyrolyzes during this heat treatment to form a carbon char. Further heating, either as part of the same heat cycle as the binder burn-out step or in an independent subsequent heating step, the preform is melt infiltrated, such as with molten silicon supplied externally. The molten silicon infiltrates into the porosity, reacts with the carbon constituent (carbon, carbon source, or carbon char) of the matrix to form silicon carbide, and fills the porosity to yield the desired CMC component.

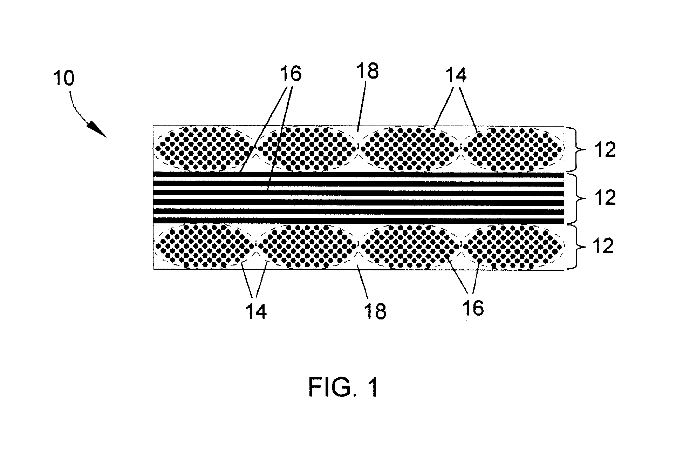

An example of a CFCC material produced by a melt-infiltration process is depicted in FIG. 1, which represents a surface region of a CFCC component 10 as comprising multiple laminae 12, each derived from an individual prepreg that comprised unidirectionally-aligned tows 14 impregnated with a ceramic matrix precursor. As a result, each lamina 12 contains unidirectionally-aligned fibers 16 encased in a ceramic matrix 18 that includes a silicon carbide phase (not shown) formed, wholly or in part, by conversion of the ceramic matrix precursor during firing and melt infiltration, as well as an elemental silicon and/or silicon alloy phase (not shown) resulting from the melt infiltration process. This description of the component 10 of FIG. 1 is representative of the aforementioned HiPerComp® CFCC.

CMCs and CFCCs articles produced to contain silicon carbide fibers in a matrix of silicon carbide and elemental silicon and/or silicon alloy cannot be used at temperatures exceeding the melting point of silicon (about 1405°C) or the silicon alloy in the matrix because the molten silicon may react with boron nitride and/or carbon release agents that form the de-bond layers on the fibers/tows, causing embrittlement of the composite. Furthermore, molten silicon tends to seep from the surface of the composite article, where it may react with and damage metallic or other ceramic components contacting or in close proximity to the article.

### BRIEF DESCRIPTION OF THE INVENTION

The present invention provides a process for producing a silicon-containing CMC article that includes processing steps to enable the CMC article to exhibit suitable physical, mechanical, and microstructural properties at elevated temperatures, and particularly temperatures exceeding the melting point of silicon.

According to a first aspect of the invention, the process entails producing a ceramic matrix composite body containing a ceramic reinforcement material in a solid matrix that comprises a ceramic matrix material and solid elemental silicon and/or one or more silicon alloys. The solid elemental silicon and/or silicon alloy(s) are then at least partially removed from the solid matrix. If partially removed, the remaining solid elemental silicon and/or silicon alloy may be converted to a refractory ceramic material, for example, by reacting it with a gaseous species infiltrated into the solid matrix. The solid elemental silicon and/or silicon alloy(s) is sufficiently removed from the body to enable the ceramic matrix composite article to structurally and chemically withstand temperatures above 1405°C. For example, the ceramic matrix composite article may be installed in a gas turbine engine and subjected to a temperature of up to at least about 2700°F (about 1480°C).

A significant advantage of this invention is the ability to produce SiC/SiC (fiber/matrix) CMC and CFCC articles that are capable of use at temperatures exceeding the melting point of silicon. In a particular example, SiC/SiC CMC and CFCC articles can be produced by a melt infiltration (MI) process by which elemental silicon and/or one or more silicon alloys are infiltrated into a porous preform, a portion of the silicon is reacted to form the ceramic matrix material of the article, and a remaining portion of the silicon fills the porosity within the article. The elemental silicon and/or silicon alloy are prone to melting at temperatures above the melting point of silicon, with the result that molten silicon may seep from the article and/or react with a de-bond layer on the reinforcement material (e.g., fibers/tows) of the article to form brittle phases. The invention preferably eliminates the elemental silicon and/or silicon alloy from the article or at least the risks associated with the presence of elemental silicon and/or silicon alloy, and permits use of the article at temperatures above the melting point of silicon. Because the removal of the solid elemental silicon and/or silicon alloy(s) is likely to create internal cavities within the solid matrix and create surface access routes to the cavities that would allow reactive gases to penetrate the solid matrix and attack the release agent on the ceramic reinforcement material, access to the cavities can be obstructed by at least partially filling the cavities and/or plugging the surface access routes to the cavities with a refractory solid.

Other aspects and advantages of this invention will be better appreciated from the following detailed description.

### BRIEF DESCRIPTION OF THE DRAWINGS

FIG. 1 schematically represents a fragmentary cross-sectional view of a CFCC article.

### DETAILED DESCRIPTION OF THE INVENTION

The present invention will be described in terms of processes for producing CMC articles, including CFCC articles, that can be used at temperatures exceeding the melting point of silicon (about 1405°C), and preferably up to temperatures of at least about 2700°F (about 1480°C) and therefore well over the melting point of silicon. CMC materials of particular interest to the invention are those containing silicon, such as CMC's containing silicon carbide as the reinforcement and/or matrix material, a particular example of which is continuous silicon carbide fibers in a matrix of silicon carbide. However, other silicon-containing materials are also within the scope of the invention, including ceramics such as silicon nitride and silicides (intermetallics) such as niobium silicide and molybdenum silicide. While various applications are foreseeable, particular applications for the component 10 include components of gas turbine engines, such as combustor liners, blades, vanes and shrouds within the turbine sections of gas turbines.

The following discussion of CMC articles of this invention will make reference to FIG. 1, which as noted previously is representative of a CFCC component 10 comprising multiple laminae 12, each derived from an individual prepreg that originally comprised unidirectionally-aligned tows 14 impregnated with a ceramic matrix precursor. As a result of debulking, curing and firing the laminate preform formed by the stacked prepregs, each lamina 12 contains unidirectionally-aligned fibers 16 encased in a matrix 18 that includes a silicon carbide phase that may be formed in part by conversion of the ceramic matrix precursor during firing and melt infiltration. However, as a particular aspect of the present invention, with further processing steps as described below the matrix 18 preferably does not contain an elemental silicon or silicon alloy phase as previously ascribed to CMCs produced by silicon melt infiltration processes. Instead, the matrix 18 is preferably either entirely formed of one or more ceramic materials, or is predominantly one or more ceramic materials with any residual elemental silicon or silicon alloy being primarily limited to locations within the matrix 18 where they are completely contained within the matrix 18 so as to avoid direct contact with the fiber de-bond layer and/or lack surface access routes through which the molten silicon or silicon alloy can seep to the surface of the component 10.

As a CFCC component 10, the tows 14 are preferably unidirectional in each lamina 12, i.e., oriented side-by-side and parallel to each other. Suitable fiber diameters, tow diameters and center-to-center tow spacings will depend on the particular application, the thicknesses of the laminae 12, and other factors, and therefore are not represented to scale in FIG. 1. According to known practice, the individual fibers 16 of the tows 14 are preferably coated with a release agent, such as boron nitride (BN) or carbon, to form a de-bond layer (not shown) that allows for limited and controlled slip between the matrix 18 and the tows 14 and their individual fibers 16. As cracks develop in the component 10, fibers 16 that bridge the crack act to redistribute the load to adjacent fibers 16 and regions of the matrix 18, thus inhibiting or at least slowing further propagation of the crack.

As previously noted, during the fabrication of the component 10 a desired number of prepreg tapes are laid-up to form a preform (not shown) that undergoes further processing to yield the component 10. Each tape is formed to contain a reinforcement architecture (formed by the fibers 16) with a precursor of the desired material for the matrix 18, e.g., SiC, carbon, and/or one or more carbon-containing particulate materials if the desired matrix material is SiC. According to conventional practice, such prepreg tapes can be formed in a single operation by applying a precursor-containing slurry during winding of a continuous strand of tow 16 onto a drum. Various slurries are known for this purpose, with a typical slurry composition containing, in addition to the desired ceramic precursor(s), ceramic constituents of the matrix 18 (for example, silicon carbide), one or more organic binders that can be pyrolyzed to form a carbon char (for example, furanic resins and/or phenolic resins), additional organic resins that serve as processing aids (for example, polyvinybutyral), solvents for the binders (for example, toluene and/or MIBK), etc. Preferred compositions for the precursor will depend on the particular composition desired for the ceramic matrix 18 of the component 10. Following the winding operation, the slurry is allowed to partially dry and the resulting prepreg tape is removed from the drum, laid-up with other tapes, and then debulked and cured while subjected to elevated pressures and temperatures to form a cured preform. The cured preform is then heated in vacuum or in an inert atmosphere to decompose the organic binders and form a carbon char, yielding a porous preform that is ready for melt infiltration with molten silicon. During melt infiltration, silicon and/or one or more silicon alloys (typically applied externally to the preform) is melted and the molten silicon and/or silicon alloy infiltrates into the porosity of the preform. A portion of the molten silicon is reacted with carbon present in the preform, such as the aforementioned carbon and/or carbon-containing particulate material (if any) originally present in the slurry as a precursor and/or any carbon char formed by pyrolysis of the organic binders, to form silicon carbide. The remainder of the molten silicon fills the porosity. Cooling yields a CMC component whose matrix comprises a silicon carbide phase and solid elemental silicon and/or one or more silicon alloy phases. Specific processing techniques and parameters for the above process will depend on the particular composition of the materials and are otherwise within the capabilities of those skilled in the art, and therefore will not be discussed here.

As a result of the above process, a preliminary composite structure for the component 10 of this invention is produced having a matrix that contains ceramic phase (e.g., SiC), at least a part of which is a reaction-formed phase produced by melt infiltration with silicon, as well as elemental (free) silicon and/or one or more silicon alloys as a second non-ceramic phase. While free silicon has been used to fill the porosity of prior art CMC articles, as exemplified by the aforementioned HiPerComp® SiC/Si-SiC CMC articles, the presence of elemental silicon and/or silicon alloy in the composite structure poses a limitation to the temperatures at which such articles can be employed. In particular, these articles cannot be used at temperatures exceeding the melting point of silicon or the silicon alloy because of the potential damage molten silicon or molten silicon alloy can cause to surrounding components if it seeps from the surface of the composite, and the embrittlement of the composite that occurs if the molten silicon reacts with the boron nitride and/or carbon release agents used to form the de-bond layers on the tows 14 and fibers 16. Accordingly, one aspect of the invention is to at least partially and preferably completely remove elemental silicon and/or silicon alloy from the matrix 18 of the composite structure using a subtractive process and, if necessary, subsequent conversion of any remnant elemental silicon and/or silicon alloy to a silicon compound that is nonreactive with the release agent, for example, silicon carbide, silicon nitride, or refractory silicides, or to at least partially and preferably completely convert the elemental silicon and/or silicon alloy in the matrix 18 to one of the aforementioned non-reactive silicon compounds. Another aspect of the invention is to ensure that the de-bond layer formed by the release agent is present in a sufficient amount after processing of the component 10 so that its load-redistribution function is preserved.

A variety of techniques can be used to remove and/or convert the free silicon and/or silicon alloy to a nonreactive refractory material, preferably to the extent that the matrix 18 of the component 10 consists essentially of ceramic, for example, the matrix 18 does not contain more than about 50 weight percent free silicon, and more preferably not more than about 25 weight percent free silicon. A technique suitable for removing free silicon and silicon alloys is to draw out the silicon by placing a porous media in direct contact with the silicon-infiltrated composite structure and then heating the composite structure above the melting temperature of silicon and/or the alloy. The material of the porous media can be selected such that capillary forces drive the molten silicon and/or silicon alloy from the preliminary composite structure and into the porous media. For this purpose, it is believed that the material for the porous media should preferably exhibit better wettability with silicon and/or have smaller pore size than the composite structure. While not wishing to be limited, suitable materials for this purpose are believed to include porous carbon or compacts of carbon powders, carbon fiber in the form or cloths, felts, wool or loose fibers, porous compacts of boron carbide, porous compacts of molybdenum carbide, or a mixture of two or more of these materials. Suitable pore sizes for the porous media are believed to be in a range of about 0.01 to about 100 micrometers in diameter. Suitable heating conditions are believed to include a vacuum of less than about 5 Torr (about 7 mbar) or an atmosphere containing nonreactive (e.g., noble) gases at a temperature of about 1380°C to about 1450°C for durations of up to about ten hours, though lesser and greater temperatures and durations are also possible.

Another suitable technique for removing free silicon and silicon alloys is to heat the composite structure in high vacuum to a temperature and for a duration sufficient to melt and vaporize the free silicon and/or silicon alloys and eliminate the resulting vapors from the composite structure. Suitable temperatures for this step are believed to be at least 1500°C to about 2000°C, with durations of about five minutes or more believed to be sufficient, with lesser and greater temperatures and durations being foreseeable.

Another technique for removing the free silicon and silicon alloys is to employ a chemical etching technique. For example, etchants such as mixtures of nitric and hydrofluoric acids, or hydrofluorosilicic acid are believed to be able to preferentially etch elemental silicon and silicon alloys from the composite structure without attacking the desired SiC fibers 16, SiC matrix 18, and release agents of the de-bond layer on the fibers 16. Using the proposed etchants, suitable conditions for the etching process are believed to include temperatures of about 20°C to about 150°C, with various temperatures and durations likely possible.

The above steps are preferably carried out to at least partially remove solid free (elemental) silicon and/or silicon alloys from the solid matrix 18 of the component 10. If only partially removed, the remaining free silicon and/or silicon alloy is preferably converted to a refractory ceramic material by reacting it with a gaseous species infiltrated into the matrix 18. For example, the component 10 can be heated in a controlled environment that will cause conversion of the free silicon to a refractory ceramic, such as silicon carbide, silicon nitride, and/or a refractory silicide phase, as a result of the silicon reacting with an appropriate gas present in the controlled environment at the treatment temperature. Nonlimiting examples include carbon-containing gases (for example, carbon monoxide and hydrocarbons such as methane) to form silicon carbide, nitrogen-containing gases (such as nitrogen and ammonia) to form silicon nitride, and precursor gases for the metallic component of the refractory silicide (such as the hydrides or halides of molybdenum, niobium, and/or tungsten). The reactants need not be gaseous at room temperature, but only at the temperature where the reaction is carried out. Suitable temperatures for this step are lower than the previously-noted temperatures for vaporizing free silicon, for example, about 1200°C to about 1450°C, with various temperatures and durations likely possible. Suitable atmospheres for this process include partial vacuums containing the reactive gas species, or mixtures of the reactant gas species with nonreactive gasses such as the noble gases.

Because the removal of free silicon and/or silicon alloy from the component 10 would have created internal cavities within the matrix 18 as well as surface access routes to the cavities, the release agent on the fibers 16 is subject to attack by reactive gases that penetrate the matrix 18. Accordingly, access to the cavities is preferably obstructed by at least partially filling the cavities and/or plugging the surface access routes to the cavities with a refractory solid. For example, the cavities can be filled with silicon carbide or silicon nitride using a chemical vapor infiltration (CVI) process or a polymer impregnation and pyrolysis (PIP) process.

While most of the free silicon in the matrix 18 can be removed or otherwise eliminated by using one or more of the above methods, there remains a likelihood that some free silicon may remain in the matrix 18 after such treatments that could pose a remaining threat to the de-bond layer if the final component 10 is subsequently exposed to temperatures above the melting temperature of silicon. The above-noted processes for removing and converting free silicon may also directly subject the de-bond layer to attack by molten silicon or silicon vapors. To ensure that such residual silicon will not attack or otherwise degrade the de-bond layer to the extent that its load-redistribution function is unacceptably degraded, one or more of the following additional steps may be taken. First, the de-bond layer may simply be deposited to a thickness that takes into account the amount of release agent that will be reacted with the free silicon or otherwise lost during the performance of one of the above removal/conversion steps. For example, while a typical thickness for a boron nitride or carbon de-bond layer is about 0.1 to about 1 micrometer, a thickness of at least 0.5 up to about 2 micrometers may be used so that following one of the above removal/conversion steps the remaining de-bond layer will completely coat the fibers 16.

Alternatively or in addition, the de-bond layer may be provided with a thick non-oxide outer layer, such as relatively thicker layer of silicon nitride typically used as a standard outer layer for boron nitride and/or carbon-based de-bond layers. A sufficient thickness for such an outer layer is believed to be about 0.5 to about 5 micrometers, though lesser and greater thicknesses are also foreseeable. Alternatively, it is foreseeable that the de-bond layer could be protected by an outer layer that is nonreactive to molten silicon and/or silicon alloy to provide a barrier layer that covers the de-bond layer on the fibers 16 and inhibits any molten elemental silicon and/or silicon alloy from reacting with the release agent during the silicon infiltration process, during removal or conversion of the elemental silicon and/or silicon alloy, and during subsequent high temperature excursions above the melting temperature of silicon. A sufficient thickness for such a protective outer layer is believed to be about 0.05 to about 5 micrometers, though lesser and greater thicknesses are also foreseeable.

Finally, as another additional or alternative technique, the de-bond layer may have a multiple-layer construction that includes layers of one or more release agents overlayed by one or more protective layers. For example, suitable materials for an outermost protective layer include silicon nitride, while suitable materials for inner protective layers include reactive materials such as ZrC, HfC, NbC, and TaC. In the event molten silicon penetrates the outermost protective layer, the underlying protective layer reacts with the molten silicon to form SiC and refractory silicides such as ZrSi₂ or TaSi₂. With this approach, sufficient thicknesses for the protective layers and the de-bond layers are believed to be about 0.05 to about 2 micrometers and about 0.05 to about 2 micrometers, respectively, though lesser and greater thicknesses are also foreseeable.

By sufficiently removing free silicon from the composite component 10 in the manner described above, the component 10 is rendered capable of structurally and chemically withstanding temperatures above the melting point of silicon. For example, the composite component 10 may be formed as a combustor liner, blade, vane or shroud, installed in a gas turbine engine, and subjected to temperatures of up to above 1480°C and possibly higher.

In an investigation leading to the present invention, a plate of a SiC/Si-SiC composite material was produced by a silicon melt-infiltration process. The SiC fiber was HI-NICALON® Type S from Nippon Carbon Co., Ltd. A bar was then cut from the plate and placed in a graphite container that was tightly packed with graphite wool, and then heat treated in vacuum at a temperature of about 1500°C for about two hours. After this heat treatment, the bar was determined to have lost about 7% of its weight. The composite bar then underwent tensile testing, by which it was observed that most of the measured tensile properties were lower than those measured in a second untreated bar that had been cut from the same plate. Even so, the heat treated bar exhibited graceful failure and fractured at a higher strain than the as-fabricated bar. Examination of a polished cross-section prepared from the heat treated bar revealed the presence of a significant amount of porosity. The pores were concluded to have been regions within the bar from which free silicon had been removed by vaporization or wicking into the carbon wool during the heat treatment. Consequently, the experiment demonstrated that it was possible to remove a large amount of the free silicon from a SiC/Si-SiC composite without embrittling the composite or otherwise unacceptably reducing the mechanical properties of the composite. In view of this, it was further concluded that the maximum temperature of the composite could be increased to above the melting temperature of silicon by either removing or converting the free silicon within the composite to yield an essentially SiC/SiC composite without unacceptably reducing the mechanical properties of the composite.

While the invention has been described in terms of specific embodiments, it is apparent that other forms could be adopted by one skilled in the art. Therefore, the scope of the invention is to be limited only by the following claims.

For completeness, various aspects of the invention are now set out in the following numbered clauses:
1. A process for producing a ceramic matrix composite article, the process comprising:
   producing a ceramic matrix composite body containing a ceramic reinforcement material in a solid matrix that comprises a ceramic matrix material and solid elemental silicon and/or silicon alloy; and then
   producing the ceramic matrix composite article by at least partially removing the solid elemental silicon and/or silicon alloy from the solid matrix and optionally reacting a remainder of the solid elemental silicon and/or silicon alloy in the solid matrix to form at least one refractory material, the solid elemental silicon and/or silicon alloy being sufficiently removed from the body to enable the ceramic matrix composite article to structurally and chemically withstand temperatures above 1405°C.
2. The process according to clause 1, wherein the body is produced by:
   infiltrating molten elemental silicon and/or silicon alloy into a porous preform comprising the ceramic reinforcement material, a first portion of the molten elemental silicon and/or silicon alloy being reacted to form at least a portion of the ceramic matrix material and a second portion of the molten elemental silicon and/or silicon alloy filling the porosity of the preform; and then
   cooling the infiltrated preform to solidify the second portion of the molten elemental silicon and/or silicon alloy to form the solid elemental silicon and/or silicon alloy of the solid matrix and yield the body.
3. The process according to clause 1, wherein the ceramic reinforcement material comprises silicon carbide fibers.
4. The process according to clause 1, wherein the ceramic matrix material comprises silicon carbide.
5. The process according to clause 1, wherein the solid matrix of the ceramic matrix composite article consists essentially of the ceramic matrix material.
6. The process according to clause 5, wherein the ceramic reinforcement material comprises silicon carbide fibers
7. The process according to clause 1, wherein the solid elemental silicon and/or silicon alloy is at least partially removed from the solid matrix by melting the solid elemental silicon and/or silicon alloy and drawing the molten elemental silicon and/or silicon alloy from the body.
8. The process according to clause 7, wherein the molten elemental silicon and/or silicon alloy is drawn from the body with a porous material.
9. The process according to clause 1, wherein the solid elemental silicon and/or silicon alloy is at least partially removed from the solid matrix by vaporization of the solid elemental silicon and/or silicon alloy.
10. The process according to clause 1, wherein the solid elemental silicon and/or silicon alloy is at least partially removed from the solid matrix by etching the solid elemental silicon and/or silicon alloy.
11. The process according to clause 1, wherein the solid elemental silicon and/or silicon alloy is substantially entirely removed from the solid matrix.
12. The process according to clause 1, wherein the solid elemental silicon and/or silicon alloy is partially removed from the solid matrix, and at least part of the remainder of the solid elemental silicon and/or silicon alloy in the solid matrix is reacted to form the at least one refractory material.
13. The process according to clause 12, wherein the part of the remainder of the solid elemental silicon and/or silicon alloy is reacted by infiltrating the ceramic matrix composite article with a gas.
14. The process according to clause 13, wherein the at least one refractory material is chosen from the group consisting of silicon carbide, silicon nitride, and refractory silicides.
15. The process according to clause 1, further comprising coating the ceramic reinforcement material with a release agent that contacts the solid matrix of the body, and the at least one refractory material formed by reacting the solid elemental silicon and/or silicon alloy in the solid matrix is not reactive with the release agent.
16. The process according to clause 15, further comprising the step of retaining an amount of the release agent on the ceramic reinforcement material to allow limited and controlled slip between the ceramic reinforcement material and the solid matrix of the ceramic matrix composite article.
17. The process according to clause 16, wherein the retaining step comprises forming a barrier layer that covers the release agent on the ceramic reinforcement material and inhibits any molten elemental silicon and/or silicon alloy within the body and the ceramic matrix composite article from reacting with the release agent.
18. The process according to clause 16, wherein the retaining step comprises forming the release agent on the ceramic reinforcement material to have a sufficient thickness so that during the step of producing the ceramic matrix composite article a portion of the release agent reacts with the solid elemental silicon and/or silicon alloy and a remaining portion of the release agent remains as a layer that entirely covers the ceramic reinforcement material within the ceramic matrix composite article.
19. The process according to clause 1, further comprising the step of installing the ceramic matrix composite article in a gas turbine engine and subjecting the ceramic matrix composite article to a temperature of at least 1405°C.
20. A process for producing a ceramic matrix composite article, the process comprising:
   producing a porous preform comprising silicon carbide fibers coated with a release agent;
   infiltrating molten elemental silicon and/or silicon alloy into the porous preform so that a first portion of the molten elemental silicon and/or silicon alloy reacts to form a silicon carbide matrix material and a second portion of the molten elemental silicon and/or silicon alloy fills the porosity of the preform;
   cooling the infiltrated preform to solidify the second portion of the molten elemental silicon and/or silicon alloy and form a body containing the silicon carbide fibers in a solid matrix that comprises the silicon carbide matrix material and solid elemental silicon and/or silicon alloy formed by the solidification of the second portion of the molten elemental silicon and/or silicon alloy, the release agent of the silicon carbide fibers contacting the solid matrix;
   at least partially removing the solid elemental silicon and/or silicon alloy from the solid matrix;
   reacting any remainder of the solid elemental silicon and/or silicon alloy in the solid matrix to form at least one refractory material chosen from the group consisting of silicon carbide, silicon nitride, and refractory silicides phases that are not reactive with the release agent, wherein the ceramic matrix composite article is produced and the solid matrix thereof consists essentially of the silicon carbide matrix material;
   treating at least the surface of the ceramic matrix composite article to obstruct access to any cavities within the ceramic matrix composite article with a refractory solid; and then
   installing the ceramic matrix composite article in a gas turbine engine and subjecting the ceramic matrix composite article to a temperature of at least 1405°C, an amount of the release agent being retained on the silicon carbide fibers to allow limited and controlled slip between the silicon carbide fibers and the solid matrix of the ceramic matrix composite article.

## Claims

1. A process for producing a ceramic matrix composite article (10) from a ceramic matrix composite body containing a ceramic reinforcement material (14,16) in a solid matrix that comprises a ceramic matrix material (18) and solid elemental silicon and/or silicon alloy, **characterized by**:
at least partially removing the solid elemental silicon and/or silicon alloy from the solid matrix and optionally reacting a remainder of the solid elemental silicon and/or silicon alloy in the solid matrix to form at least one refractory material, the solid elemental silicon and/or silicon alloy being sufficiently removed from the body to enable the ceramic matrix composite article (10) to structurally and chemically withstand temperatures above 1405°C.

2. The process according to claim 1, **characterized in that** the body is produced by:
infiltrating molten elemental silicon and/or silicon alloy into a porous preform comprising the ceramic reinforcement material (14,16), a first portion of the molten elemental silicon and/or silicon alloy being reacted to form at least a portion of the ceramic matrix material (18) and a second portion of the molten elemental silicon and/or silicon alloy filling the porosity of the preform; and then cooling the infiltrated preform to solidify the second portion of the molten elemental silicon and/or silicon alloy to form the solid elemental silicon and/or silicon alloy of the solid matrix and yield the body.

3. The process according to claim 2, **characterized in that** the solid matrix of the ceramic matrix composite article (10) consists essentially of the ceramic matrix material (18).

4. The process according to any preceding claim, **characterized in that** the ceramic reinforcement material (14,16) comprises silicon carbide fibers (16).

5. The process according to any preceding claim, **characterized in that** the ceramic matrix material (18) comprises silicon carbide.

6. The process according to any preceding claim, **characterized in that** the solid elemental silicon and/or silicon alloy is at least partially removed from the solid matrix by melting the solid elemental silicon and/or silicon alloy and drawing the molten elemental silicon and/or silicon alloy from the body.

7. The process according to any preceding claim, **characterized in that** the solid elemental silicon and/or silicon alloy is at least partially removed from the solid matrix by vaporization of the solid elemental silicon and/or silicon alloy.

8. The process according to any preceding claim, **characterized in that** the solid elemental silicon and/or silicon alloy is at least partially removed from the solid matrix by etching the solid elemental silicon and/or silicon alloy.

9. The process according to any preceding claim, **characterized in that** the solid elemental silicon and/or silicon alloy is entirely removed from the solid matrix.

10. The process according to any one of claims 1 to 8, **characterized in that** the solid elemental silicon and/or silicon alloy is partially removed from the solid matrix, and at least part of the remainder of the solid elemental silicon and/or silicon alloy in the solid matrix is reacted to form the at least one refractory material.

11. The process according to claim 10, wherein the part of the remainder of the solid elemental silicon and/or silicon alloy is reacted by infiltrating the ceramic matrix composite article with a gas.

12. The process according to claim 11, wherein the at least one refractory material is chosen from the group consisting of silicon carbide, silicon nitride, and refractory silicides.

13. The process according to any preceding claim, further comprising coating the ceramic reinforcement material with a release agent that contacts the solid matrix of the body, and the at least one refractory material formed by reacting the solid elemental silicon and/or silicon alloy in the solid matrix is not reactive with the release agent.

14. The process according to claim 13, further comprising the step of retaining an amount of the release agent on the ceramic reinforcement material to allow limited and controlled slip between the ceramic reinforcement material and the solid matrix of the ceramic matrix composite article.

15. The process according to claim 14, wherein the retaining step comprises forming a barrier layer that covers the release agent on the ceramic reinforcement material and inhibits any molten elemental silicon and/or silicon alloy within the body and the ceramic matrix composite article from reacting with the release agent.
